(19) **Europäisches Patentamt / European Patent Office / Office européen des brevets**

(11) **EP 3 859 041 B1**

(12) **EUROPEAN PATENT SPECIFICATION**

(45) Date of publication and mention
of the grant of the patent:
**03.06.2026 Bulletin 2026/23**

(21) Application number: **19864727.3**

(22) Date of filing: **27.09.2019**

(51) International Patent Classification (IPC):
*C22C 38/38* (2006.01)    *C22C 38/28* (2006.01)
*C22C 38/00* (2006.01)    *C22C 38/02* (2006.01)
*C22C 38/06* (2006.01)    *C22C 38/20* (2006.01)
*C22C 38/22* (2006.01)    *C22C 38/24* (2006.01)
*C22C 38/26* (2006.01)    *C22C 38/40* (2006.01)
*C22C 38/32* (2006.01)    *C21D 8/02* (2026.01)
*C21D 1/19* (2006.01)    *C21D 1/25* (2006.01)
*C21D 6/00* (2006.01)    *C21D 8/04* (2026.01)
*C21D 9/48* (2006.01)    *C23C 2/02* (2006.01)
*C23C 2/06* (2006.01)    *C23C 2/28* (2006.01)
*B32B 15/01* (2006.01)

(52) Cooperative Patent Classification (CPC):
**C21D 8/0426; B32B 15/013; C21D 1/19;
C21D 1/25; C21D 6/002; C21D 6/008;
C21D 8/0442; C21D 8/0463; C21D 9/48;
C22C 38/02; C22C 38/20; C22C 38/22;
C22C 38/24; C22C 38/26; C22C 38/28;**    (Cont.)

(86) International application number:
**PCT/KR2019/012563**

(87) International publication number:
**WO 2020/067752 (02.04.2020 Gazette 2020/14)**

(54) **HIGH-STRENGTH COLD ROLLED STEEL SHEET HAVING HIGH HOLE EXPANSION RATIO, HIGH-STRENGTH HOT-DIP GALVANIZED STEEL SHEET, AND MANUFACTURING METHODS THEREFOR**

HOCHFESTES KALTGEWALZTES STAHLBLECH MIT HOHEM LOCHAUSDEHNUNGSVERHÄLTNIS, HOCHFESTES FEUERVERZINKTES STAHLBLECH UND HERSTELLUNGSVERFAHREN DAFÜR

TÔLE D'ACIER LAMINÉE À FROID À HAUTE RÉSISTANCE AYANT UN RAPPORT D'EXPANSION DE TROU ÉLEVÉ, TÔLE D'ACIER GALVANISÉE À CHAUD PAR TREMPE À HAUTE RÉSISTANCE, ET PROCÉDÉS DE FABRICATION ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018 KR 20180116416
23.09.2019 KR 20190117044**

(43) Date of publication of application:
**04.08.2021 Bulletin 2021/31**

(73) Proprietor: **POSCO Co., Ltd
Pohang-si, Gyeongsangbuk-do 37859 (KR)**

(72) Inventors:
• **IM, Young-Roc
Gwangyang-si, Jeollanam-do 57807 (KR)**
• **PARK, Jong-Chan
Gwangyang-si, Jeollanam-do 57807 (KR)**
• **KWAK, Jai-Hyun
Gwangyang-si, Jeollanam-do 57807 (KR)**
• **KOO, Min-Seo
Gwangyang-si, Jeollanam-do 57807 (KR)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **Meissner Bolte Partnerschaft mbB**
**Patentanwälte Rechtsanwälte**
**Postfach 86 06 24**
**81633 München (DE)**

(56) References cited:
| | |
|---|---|
| **EP-A1- 2 258 887** | **EP-A1- 2 831 296** |
| **EP-A1- 3 292 228** | **WO-A1-2017/105025** |
| **WO-A1-2017/109541** | **CN-A- 104 928 577** |
| **JP-A- 2007 070 659** | **KR-A- 20060 103 480** |
| **KR-A- 20120 074 798** | **KR-A- 20140 083 286** |
| **KR-B1- 101 858 852** | |

• **HAUSMANN K ET AL: "Trip-aided bainitic-ferritic sheet steel: a critical assessment of alloy design and heat treatment", 1 January 2013 (2013-01-01), pages 209 - 218, XP009531085, ISBN: 978-0-87339-762-9, Retrieved from the Internet <URL:https://www.researchgate.net/publication/259841165_Trip-aided_bainitic-ferritic_sheet_steel_A_critical_assessment_of_alloy_design_and_heat_treatment>**

• **SHIMA PASHANGEH ET AL: "Detection and Estimation of Retained Austenite in a High Strength Si-Bearing Bainite-Martensite-Retained Austenite Micro-Composite Steel after Quenching and Bainitic Holding (Q&B)", METALS, vol. 9, no. 5, 1 January 2019 (2019-01-01), CH, pages 492, XP055743883, ISSN: 2075-4701, DOI: 10.3390/met9050492**

• **S H MAGNER ET AL: "A HISTORICAL REVIEW OF RETAINED AUSTENITE AND ITS MEASUREMENT BY X-RAY DIFFRACTION", vol. 45, 1 January 2002 (2002-01-01) - 3 August 2001 (2001-08-03), US, pages 92 - 97, XP055743907, Retrieved from the Internet <URL:http://citeseerx.ist.psu.edu/viewdoc/download?doi=10.1.1.278.7228&rep=rep1&type=pdf>**

(52) Cooperative Patent Classification (CPC): (Cont.)
**C22C 38/32; C22C 38/38; C22C 38/40; C23C 2/02; C23C 2/0224; C23C 2/06; C23C 2/28; C23C 2/29;** C21D 2211/002; C21D 2211/008

**Description**

[Technical Field]

The present invention relates to a high-strength cold rolled steel sheet and high-strength hot-dip galvanized steel sheet having a high hole expansion ratio, and a manufacturing method thereof.

[Background Art]

In recent years, development of a technology of manufacturing a steel sheet having high strength has been promoted to reduce the weight of automobiles. A steel sheet having both high strength and formability may increase productivity, so it is excellent in terms of economy and is more advantageous in terms of safety of final parts. In particular, demand for steel having high tensile strength (TS) of 1180 MPa or higher has increased because a steel sheet having high tensile strength (TS) has a high bearing load until fracture occurs. In the related art, many attempts have been made to improve strength of the existing steel, but it was found that simple improvement of the strength degrades ductility and hole expansion ratio (HER). Meanwhile, transformation induced plasticity (TRIP) steel sheet in which a large amount of Si or Al is added may be a related art which overcomes the aforementioned shortcomings. However, in the case of TRIP steel sheet, it is possible to obtain an elongation of 14% or more at TS 1180 MPa class but liquid metal embrittlement (LME) resistance is deteriorated due to the addition of a large amount of Si and Al, which leads to poor weldability, and thus, commercialization of TRIP steel sheet as a material for automobile structures is limited.

In addition, various yield ratios are pursued in the same tensile strength class according to usages and purposes, and it is not easy to produce a steel having high hole expansion ratio with a steel sheet having a low yield ratio. The reason is because it is usually necessary to introduce a martensite or ferrite phase as a second phase to lower a yield ratio but such a structural characteristics is a factor that impairs the hole expansion ratio.

Patent document 1 discloses a high-strength cold rolled steel sheet having yield ratio, strength, hole expansion ratio, delayed fracture resistance characteristics and having a high elongation of 17.5% or more. However, Patent document 1 has a disadvantage in that weldability is poor due to an occurrence of LME due to a high Si addition.

Therefore, the present disclosure proposes a 1180 MPa-class steel material exhibiting high strength and excellent hole expansion ratio of 25% or more, elongation of 5% to 13%, and excellent weldability even at a low yield ratio, and a manufacturing method thereof.

Patent document 2 relates to a method for producing a high strength coated steel sheet having improved ductility and formability and to a coated sheet obtained with this method.

[Related art document]

(Patent document 1) Korean Patent Laid-open Publication No. 2017-7015003
(Patent document 2) WO 2017/109541 A1

[Disclosure]

[Technical Problem]

An aspect of the present disclosure may provide a high-strength cold rolled steel sheet having elongation suitable for machining, a high hole expansion ratio, and good weldability, while having a high strength and a low yield ratio, a high-strength hot-dip galvanized steel sheet manufactured using the same, and a manufacturing method thereof.

[Technical Solution]

A high-strength cold rolled steel according to the invention is defined in the independent claim claim 1. A method of manufacturing the high-strength cold-rolled sheet according to the invention is defined in the independent claim 4. A high strength hot-dip galvanized sheet is defined in claim 2 and a method of manufacturing the high strength hot-dip galvanized steel sheet is defined in claim 6. A high strength hot-dip galvanized sheet comprising an alloyed hot-dip zinc layer is defined in claim 3. A method of manufacturing the high strength hot-dip galvanized steel sheet of claim 3 is defined in claims 7. Preferred embodiments are defined in the dependent claims.

[Advantageous Effects]

According to exemplary embodiments in the present invention, a high-strength cold rolled steel sheet and hot-dip galvanized steel sheet having a high hole expansion ratio of 25% or more and an elongation of 5% to 13%, while having high tensile strength of 1180 MPa or more and a low yield ratio of 0.65 to 0.85, may be provided.

In addition, the high-strength hot-dip galvanized steel sheet of the present invention has characteristics that exhibit excellent weldability due to excellent LME resistance after galvanizing.

[Best Mode]

Singular forms as used herein also include plural forms unless obviously indicate otherwise.

As used in the disclosure, the meaning of "including" specifies a specific characteristics, regions, integers, steps, operations, elements and/or components, and do not exclude presence or addition of other specific characteristics, regions, integers, steps, operations, elements, components and/or groups.

Unless indicated otherwise, it is to be understood that all the terms used in the specification, including technical and scientific terms have the same meaning as those that are understood by those skilled in the art to which the present invention pertains.

Hereinafter, a high-strength cold rolled steel sheet and a high strength hot-dip galvanized steel sheet according to an aspect of the present invention will be described in detail.

First, an alloy composition of a high-strength cold rolled steel sheet provided in the present invention will be described in detail. In this case, the content of each component refers to weight% unless otherwise specified.

Carbon (C): 0.17 to 0.21%

Carbon is a basic element that supports strength of steel through solid solution strengthening and precipitation strengthening. If the amount of carbon is less than 0.17%, it is difficult to obtain strength equivalent to tensile strength (TS) of 1180 MPa, while satisfying other materials. Meanwhile, if the amount of carbon exceeds 0.21%, weldability deteriorates and a target hole expansion ratio value cannot be obtained. Therefore, in the present invention, the content of carbon is limited to 0.17 to 0.21%. A lower limit of C is preferably 0.18%, and an upper limit of C is preferably 0.20%.

Silicon (Si): 0.3 to 0.8%

Silicon is a key element of transformation induced plasticity (TRIP) steel that acts to increase a retained austenite fraction and elongation by inhibiting precipitation of cementite in a bainite region. If silicon is less than 0.3%, the elongation is too low as retained austenite rarely remains. Meanwhile, if silicon exceeds 0.8%, deterioration of physical properties of a weld portion due to formation of LME cracks cannot be prevented and surface characteristics and plating properties of the steel deteriorate. Therefore, in the present invention, the content of silicon is limited to 0.3 to 0.8%. A lower limit of Si is preferably 0.4% and an upper limit of Si is preferably 0.6%.

Manganese (Mn): 2.7 to 3.3%

In the present invention, the amount of manganese may be 2.7 to 3.3%. If the manganese content is less than 2.7%, it is difficult to secure strength, and if the manganese content exceeds 3.3%, a bainite transformation rate is slowed to form too much fresh martensite, making it difficult to obtain high hole expansion ratio. In addition, if the content of manganese is high, a start temperature of martensite formation is lowered and a cooling end temperature required to obtain an initial martensite phase in an annealing water cooling step is too low. Therefore, in the presentinvention, the content of manganese is limited to 2.7 to 3.3%. A lower limit of Mn is preferably 2.8% and an upper limit of Mn is preferably 3.1%.

Chromium (Cr): 0.3 to 0.7%

In the present invention, the amount of chromium may be 0.3 to 0.7%. If the amount of chromium is less than 0.3%, it is difficult to obtain target tensile strength, and the amount of chromium exceeds an upper limit of 0.7%, a transformation speed of bainite is slow, making it difficult to obtain a high hole expansion ratio. Therefore, in the presentinvention, the content of chromium is limited to 0.3 to 0.7%. A lower limit of Cr is preferably 0.4% and an upper limit of Cr is preferably 0.6%.

Aluminum (Al): 0.01 to 0.3%

In the present invention, the amount of aluminum may be 0.01 to 0.3%. If the amount of aluminum is less than 0.01%, the steel may not be sufficiently deoxidized and cleanliness is impaired. Meanwhile, the amount of aluminum exceeds 0.3%, castability of the steel is deteriorated. Therefore, in the present invention, the content of aluminum is limited to 0.01 to 0.3%. A lower limit of Al is preferably 0.03% and an upper limit of Al is preferably 0.2%.

Titanium (Ti): 0.01 to 0.03%, boron (B): 0.001 to 0.003%

In the present invention, 0.01 to 0.03% of titanium and 0.001 to 0.003% of boron are added to increase hardenability of the steel. If the content of titanium is less than 0.01%, boron may be bonded to nitrogen, so that the effect of strengthening hardenability of boron is lost, and the content of titanium exceeds 0.03%, castability of the steel is deteriorated. Meanwhile, if the content of boron is less than 0.001%, an effective hardenability strengthening effect cannot be obtained, and if boron is contained in excess of 0.003%, a boron carbide may be formed, significantly impairing hardenability. Therefore, in the present invention, the content of titanium is limited to 0.01 to 0.03%, and the content of boron is preferably limited to 0.001 to 0.003%. A lower limit of Ti is preferably 0.015% and an upper limit of Ti is preferably 0.025%. A lower limit of B is preferably 0.015% and an upper limit of B is preferably 0.0025%.

Phosphorus (P): 0.04% or less

Phosphorus exists as an impurity in the steel and it is advantageous to control its content as low as possible, but phosphorus is also intentionally added to increase strength of the steel. However, if the phosphorus is excessively added, toughness of the steel may be deteriorated. Therefore, in order to prevent this, in the present invention, an upper limit is limited to 0.04%. Preferably, the content of P is 0.01% or less.

Sulfur (S): 0.02% or less

Like phosphorus, sulfur exists as an impurity in the steel, and it is advantageous to control its content as low as possible. In addition, since sulfur deteriorates ductility and impact properties of the steel, an upper limit is limited to 0.02% or less. The content of S is preferably 0.003% or less.

Nitrogen (N): 0.01% or less

In the present invention, nitrogen is included in the steel as an impurity, and it is advantageous to control the content of nitrogen as low as possible. If a large amount of nitrogen is added, an excessive amount of nitride may be formed to degrade rollability due to excessive structure refinement, to make it impossible to control a target structure, and to impair final quality such as impact characteristics, etc. Therefore, an upper limit thereof is limited to 0.01% or less. The content of N is more preferably 0.0060% or less.

In addition to the aforementioned alloy composition, the steel sheet of the present invention may additionally include 0.1% or less of copper (Cu), 0.1% or less of nickel (Ni), and 0.1% or less of molybdenum (Mo).

Copper (Cu): 0.1% or less, nickel (Ni): 0.1% or less, molybdenum (Mo): 0.1% or less

Copper, nickel, and molybdenum are elements that increase strength of steel and are included as optional components in the present invention, and an upper limit of addition of each element is limited to 0.1%. These elements increase strength and hardenability of steel, but addition of an excessive amount thereof may exceed a target strength class, and since they are expensive elements, an upper limit of their addition is preferably limited to 0.1% in terms of economical efficiency. Meanwhile, since copper, nickel and molybdenum act as solid solution strengthening, an addition thereof less than 0.03% may be too insignificant to achieve solid solution strengthening effect, and therefore, when copper, nickel and molybdenum are added, a lower limit thereof may be limited to 0.03% or more. An upper limit of each of Cu, Ni, and Mo is preferably 0.06%.

In addition to the alloy composition described above, the steel sheet of the present disclosure may additionally include 0.03% or less of niobium (Nb) and 0.01% or less of vanadium (V).

Niobium (Nb): 0.03% or less, vanadium (V): 0.01% or less

Niobium and vanadium are elements that increase yield strength of steel through precipitation hardening and may be optionally added to increase yield strength in the present invention. However, excessive content thereof may significantly lower elongation and cause brittleness of the steel, and thus, in the present disclosure, upper limits of niobium and vanadium are limited to 0.03% and 0.01% or less, respectively. Meanwhile, since niobium and vanadium cause precipitation hardening, even a small amount of addition thereof may be effective, but if niobium and vanadium is added less than 0.005%, the effect may be insignificant. Therefore, when niobium and vanadium is added, a lower limit thereof may be limited to 0.005% or more. Upper limits of Nb and V are preferably 0.02% and 0.008%, respectively.

$$\text{Equation (1):}$$

$$0.20\% \leq [C] + ([Si]+[Al])/5 \leq 0.35\%$$

wherein [C], [Si], [Al] refer to weight percents of C, Si, and Al, respectively.

In addition to the aforementioned contents of C, Si and Al, C, Si, and Al satisfy Equation (1) above. Liquid metal embrittlement (LME) of plated steel occurs as liquid zinc penetrates an austenite grain boundary when tensile stress is formed at an austenite grain interface of the steel sheet in a state in which plated zinc becomes liquid during spot welding. Since the LME phenomenon is particularly severe in the steel sheet to which Si and Al are added, an addition amount of Si and Al is limited through Equation (1) above in the present disclosure. In addition, if the C content is high, an A3 temperature of the steel is lowered to cause an austenite region vulnerable to LME to be expanded and weaken toughness of the material, and thus, the addition amount of C is limited through Equation (1) above.

If the value of Equation (1) exceeds 0.35%, LME resistance is deteriorated during spot welding as described above, and thus, there are LME cracks after the spot welding, which impairs fatigue characteristics and structural safety. Meanwhile, as the value of Equation (1) is smaller, spot weldability and LME resistance are improved, so a lower limit thereof may not be separately set. However, if the value is less than 0.20%, it may be difficult to obtain high tensile strength of 1180 MPa class together with an excellent hole expansion ratio although spot weldability and LME resistance are improved. Therefore, the lower limit is set to 0.25%.

The remaining component of the present invention is iron (Fe). In other ordinary steel manufacturing processes, unintended impurities may inevitably be mixed from raw materials or a surrounding environment. Since these impurities are known to anyone of ordinary skill in the steel manufacturing process, all the contents thereof are not specifically mentioned in the present invention.

Meanwhile, the high-strength cold rolled steel sheet of the present invention that satisfies the aforementioned steel composition has a microstructure including, by area fraction, 3 to 7% of retained austenite, 5 to 15% of fresh martensite, 5% or less (including 0%) of ferrite, and the balance of bainite or tempered martensite, and a cementite phase, as a second phase, is precipitated and distributed in a bainite lath boundary or in a lath or grain boundary of the tempered martensite, and a volume fraction thereof is 1 to 3%.

In the high-strength cold rolled steel sheet according to the present invention, part of cementite precipitates and grows in the microstructure by limiting the content of Si and Al that stabilizes austenite by inhibiting the growth of cementite, by the condition of Equation (1). This cementite is precipitated in a martensite lath or grain boundary when martensite formed by secondary cooling is reheated, or is formed in a portion in which carbon is concentrated between bainite ferrite laths when bainite transformation occurs during reheating after secondary cooling. In the cold rolled steel sheet according to the present invention, cementite having a volume fraction of 1% or more is precipitated by limiting the upper limits of Si and Al by Equation (1), but, nevertheless, austenite remains due to the presence of partial Si and Al and carbon is distributed inside the retained austenite, and thus, the amount of precipitated cementite is less than 3%. In addition, since Si and Al are added to some extent, austenite remains present in the steel of the present disclosure at a level of 3 to 7%, but a high fraction of retained austenite as in typical TRIP steels with very high Si and Al content is not distributed in the steel of the present disclosure.

In addition, in the present invention, fresh martensite structure is introduced at a level of 5 to 15% to obtain a low yield ratio. If an austenite phase fraction is high after the secondary cooling and reheating, the carbon content in the austenite is low and stability is insufficient, and part of the austenite is transformed into fresh martensite in a subsequent cooling process, resulting in a lower yield ratio.

In addition, in the present invention, the ferrite structure is not desirable for the hole expansion ratio, but may exist at a level of 5% or less (including 0%) during the manufacturing process. In addition, the balance in the microstructure of the present invention is of bainite or tempered martensite structure.

By having the alloy components and microstructure as described above, the high-strength cold rolled steel sheet of the present invention exhibits a high hole expansion ratio of 25% or more even at a tensile strength of 1180 MPa or more and a low yield ratio of 0.65 to 0.85. As described above, the low yield ratio of the high-strength cold rolled steel sheet according to the present invention is due to the introduction of fresh martensite. The inventors of the present application found that more than 25% or more hole expansion ratio even with the fresh martensite under the alloy component and the structure control condition according to the present invention. In addition, since the high-strength cold rolled steel sheet according to the present disclosure limits the content of Si and Al, the TRIP effect is weak and an elongation of 5 to 13% is shown.

The present invention also provides a hot-dip galvanized steel sheet obtained by performing a hot-dip galvanizing on a surface of the high-strength cold rolled steel sheet and an alloyed hot-dip galvanized steel sheet obtained by performing annealing for alloying on the hot-dip galvanized steel sheet.

Next, a method of manufacturing a high-strength cold rolled steel sheet and a high strength hot-dip galvanized steel sheet according to another aspect of the present invention will be described in detail.

The high-strength cold rolled steel sheet according to the present invention is manufactured by undergoing heating a steel slab satisfying the steel component composition described above - hot rolling - cooling - coiling - cold rolling - continuous annealing - primary and secondary cooling - reheating, and details thereof are as follows.

Steel slab preparation and heating process

First, a slab having the aforementioned alloy composition and satisfying Equation (1) is prepared and heated to a temperature of 1150°C to 1250°C. Here, if a slab temperature is less than 1150°C, it may be impossible to perform a next step, hot rolling. Meanwhile, if the slab temperature exceeds 1250°C, a lot of energy is unnecessarily required to increase the slab temperature. Therefore, a heating temperature is limited to a temperature of 1150°C to 1250°C. A lower limit of the heating temperature is preferably 1190°C and an upper limit of the heating temperature is preferably 1230°C.

Hot rolling process

The heated slab is hot-rolled to a thickness suitable for an intended purpose under the condition that a finish delivery temperature (FDT) is 900°C to 980°C. If the FDT is lower than 900°C, a rolling load is large and shape defects increase, resulting in poor productivity. Meanwhile, if the FDT exceeds 980°C, surface quality deteriorates due to an increase in oxides due to an excessive high-temperature operation. Therefore, hot rolling is performed under the condition that the FDT is 900°C to 980°C. A lower limit of the FDT is preferably 910°C and an upper limit of the FDT is preferably 950°C.

Coiling process and cold rolling process

The hot-rolled steel sheet is cooled to a coiling temperature at an average cooling rate of 10°C/s to 100°C/s, and coiling is performed in a typical temperature in a range of 500°C to 700°C. After coiling, the hot-rolled steel sheet is rolled at a cold-rolling reduction ratio of 30% to 60% to obtain a cold rolled steel sheet. If the average cooling rate is less than 10°C/s, hot rolling productivity may be excessively deteriorated, and if it exceeds 100°C/s, strength of an edge portion increases, thereby increasing a material deviation in a width direction. A lower limit of the average cooling rate is preferably 20°C/s and an upper limit of the average cooling rate is preferably 80°C/s. A lower limit of a temperature for coiling is preferably 550°C and an upper limit of the temperature for coiling is preferably 650°C. If the cold rolling reduction ratio is less than 30%, it may be difficult to secure target thickness accuracy and it may be difficult to correct a shape of the steel sheet. Meanwhile, if the cold-rolling reduction rate exceeds 60%, a possibility of cracking at the edge of the steel sheet may increase and the cold-rolling load is excessively large. Therefore, in the present invention, the cold rolling reduction rate at the cold rolling step is preferably limited to 30 to 60%. A lower limit of the cold-rolling reduction ratio is more preferably 35% and an upper limit of the cold-rolling reduction ratio is more preferably 50%.

Continuous annealing process

In the present invention, the cold rolled steel sheet is subjected to continuous annealing in a temperature in a range of (Ae3 + 30°C to Ae3 + 80°C). More preferably, continuous annealing may be performed in a temperature in a range of 830°C to 880°C. In addition, the continuous annealing may be carried out in a continuous alloying hot-dip plating furnace. The continuous annealing step is to form austenite close to 100% by heating up to a single phase of austenite and use the austenite for subsequent phase transformation. If the continuous annealing temperature is lower than Ae3+30°C or less than 830°C, sufficient austenite transformation is not performed, so that desired martensite and bainite fractions cannot be secured after annealing. Meanwhile, if the continuous annealing temperature exceeds Ae3+80°C or 880°C, productivity may decrease and coarse austenite may be formed, resulting in material deterioration. In addition, oxides may grow during annealing, making it difficult to secure surface quality of a plated material. Ae3 may be calculated using thermodynamic software utilizing a computer coupling of phase diagrams and thermochemistry (CALPHAD) method commonly used in the art.

Primary and secondary cooling process

The continuously annealed steel sheet is primarily cooled at an average cooling rate of 10°C/s or less up to a temperature in a range of 560 to 700°C, and secondarily cooled at an average cooling rate of 10°C/s or more up to a temperature in a range of 270 to 330°C to introduce martensite. Here, a temperature for terminating the primary cooling is defined as a time point at which rapid cooling is started by additionally applying a quenching facility that has not been applied in the primary cooling. When a cooling process is divided into primary and secondary cooling and is carried out by stages, a temperature distribution of the steel sheet may become uniform in a slow cooling step to reduce a final temperature and material deviation and it is also advantageous to obtain a required phase composition.

The primary cooling is slow cooling at an average cooling rate of 10°C/s or less, and a cooling end temperature thereof may be in a temperature in a range of 560 to 700°C. If the primary cooling end temperature is lower than 560°C, a ferrite phase is excessively precipitated to deteriorate a final hole expansion ratio. Meanwhile, if it exceeds 700°C, the secondary cooling is excessively loaded and a plate speed of the continuous annealing line has to be slowed, resulting in lower productivity. A lower limit of the primary cooling end temperature is more preferably 580°C and an upper limit of the primary cooling end temperature is more preferably 670°C.

For the secondary cooling, a quenching facility not applied in the primary cooling is additionally applied, and a hydrogen quenching facility using $H_2$ gas may be used. Here, it is important to control a secondary cooling end temperature to 270 to 330°C at which an appropriate initial martensite fraction may be obtained. If the secondary cooling end temperature is lower than 270°C, the initial martensite fraction transformed during the secondary cooling is too high, so that there is no space for obtaining various phase transformations required in a subsequent process and a shape and workability of the steel sheet deteriorate. Meanwhile, if the secondary cooling end temperature exceeds 330°C, the initial martensite fraction is low and high hole expansion ratio cannot be obtained. A lower limit of the secondary cooling end temperature is more preferably 290°C and an upper limit of the secondary cooling end temperature is more preferably 320°C. If the average cooling rate during the secondary cooling is less than 10°C/s, a ferrite/bainite phase or the like may be formed during cooling, resulting in a decrease in strength and making it difficult to finally secure a desired microstructure.

Reheating process and hot-dip galvanizing process

The cooled steel sheet is reheated at a temperature in a range of 380°C to 460°C at a temperature increase rate of 5°C/s or less to temper the martensite obtained in the previous step, induce bainite transformation, and concentrate carbon in untransformed austenite adjacent to bainite. Here, it is important to control a reheating temperature to 380 to 460°C, and if reheating temperature is lower than 380°C or exceeds 460°C, the amount of phase transformation of bainite is small, so too much fresh martensite is formed in a final cooling process, significantly hurting elongation and hole expansion ratio. A lower limit of the reheating temperature is more preferably 440°C and an upper limit of the reheating temperature is more preferably 440°C. When the temperature increase rate during reheating exceeds 5°C/s, tempering of the martensite phase formed during the secondary cooling may be insufficient and there may be a possibility of not sufficiently obtaining bainite phase transformation during the temperature increase.

After reheating, hot-dip galvanizing is performed at a temperature in a range of 430°C to 490°C to obtain the high strength hot-dip galvanized steel sheet comprising a hot-dip zinc plating layer on a surface of the high-strength cold rolled sheet.

Annealing for alloying is performed to obtain the high strength hot-dip galvanized steel sheet comprising an alloyed hot-dip zinc plating layer on a surface of the high-strength cold rolled sheet, and then cooling is performed to room temperature.

After cooling to the room temperature, a process of performing temper rolling less than 1% may be performed to correct the shape of the steel sheet and adjust yield strength.

[Mode for Invention]

(Example)

Hereinafter, the present invention will be described in more detail through examples.

After preparing the slab having the alloy composition of Table 1, a cold rolled steel sheet was manufactured through heating the steel slab under the conditions described in Tables 2 and 3 - hot rolling - cooling - coiling - cold rolling - continuous annealing - primary and secondary cooling - reheating. Meanwhile, the FDT shown in Tables 2 and 3 below refer to a finish delivery temperature, CT refers to a hot-rolled coiling temperature, SS refers to a continuous annealing temperature, SCS refers to a primary cooling end temperature, RCS refers to secondary cooling end temperature, and RHS refers to a reheating temperature.

After measuring a microstructure, mechanical properties, and maximum LME crack size for the prepared cold rolled steel sheet, the results are shown in Table 3 below.

As for the maximum LME crack size is, a sample was spot-welded under severe conditions of dome radius 6mm, pressing force 3.54kN, welding time 234ms, H/T 100ms, tilting 5 degrees, and gap 1.0mm, a certain cross section across a nugget was taken, and a maximum length of an existing LME crack was then measured.

A type and fraction of the microstructure were measured through XRD peak analysis in the case of retained austenite, and the fractions of the remaining fresh martensite, ferrite, cementite, bainite and tempered martensite phase were measured through a scanning electron microscope EBSD analysis.

[Table 1]

| Steel type | Alloy composition (wt%) | | | | | | | | | | | | | | | |
|---|---|---|---|---|---|---|---|---|---|---|---|---|---|---|---|---|
| | C | Si | Mn | Cr | Al | Ti | B | P | S | Cu | Ni | Mo | Nb | V | N | C+(Si+Al)/5 |
| A | 0.1 7 | 0.7 26 | 2.5 8 | 0.4 99 | 0.0 53 | 0.0 19 | 0.0 018 | 0.0 09 | 0.0 06 | 0.0 2 | 0.0 0 | 0.0 58 | 0.0 03 | 0.0 03 | 0.0 045 | 0.33 |
| B | 0.1 73 | 0.5 44 | 2.7 6 | 0.0 18 | 0.0 52 | 0.0 19 | 0.0 019 | 0.0 10 | 0.0 03 | 0.0 1 | 0.0 2 | 0.0 62 | 0.0 04 | 0.0 02 | 0.0 065 | 0.29 |
| C | 0.1 7 | 0.5 25 | 2.6 | 0.5 | 0.2 05 | 0.0 19 | 0.0 019 | 0.0 06 | 0.0 02 | 0.0 3 | 0.0 1 | 0.0 63 | 0.0 01 | 0.0 05 | 0.0 034 | 0.32 |
| D | 0.1 62 | 0.5 01 | 2.5 | 0.4 7 | 0.4 50 | 0.0 18 | 0.0 018 | 0.0 07 | 0.0 04 | 0.0 2 | 0.0 1 | 0.0 62 | 0.0 01 | 0.0 03 | 0.0 077 | 0.35 |
| E | 0.1 55 | 0.7 4 | 2.6 6 | 0.5 2 | 0.0 45 | 0.0 2 | 0.0 019 | 0.0 07 | 0.0 04 | 0.0 1 | 0.0 2 | 0.0 61 | 0.0 04 | 0.0 05 | 0.0 090 | 0.31 |
| F | 0.2 37 | 0.6 96 | 2.4 | 0.4 8 | 0.0 43 | 0.0 18 | 0.0 018 | 0.0 09 | 0.0 03 | 0.0 1 | 0.0 1 | 0.0 57 | 0.0 01 | 0.0 04 | 0.0 088 | 0.38 |
| G | 0.1 82 | 0.7 2 | 3.5 8 | 0.5 14 | 0.0 48 | 0.0 22 | 0.0 021 | 0.0 12 | 0.0 04 | 0.0 2 | 0.0 1 | 0.0 08 | 0.0 03 | 0.0 03 | 0.0 072 | 0.34 |
| H | 0.1 8 | 0.7 3 | 1.6 7 | 2.5 60 | 0.0 53 | 0.0 2 | 0.0 02 | 0.0 06 | 0.0 03 | 0.0 2 | 0.0 1 | 0.0 15 | 0.0 01 | 0.0 01 | 0.0 047 | 0.34 |
| I | 0.1 84 | 0.7 4 | 2.8 7 | 0.5 02 | 0.0 53 | 0.0 2 | 0.0 019 | 0.0 06 | 0.0 06 | 0.0 3 | 0.0 1 | 0.0 05 | 0.0 04 | 0.0 04 | 0.0 042 | 0.34 |
| J | 0.1 81 | 0.7 2 | 3.1 7 | 0.4 92 | 0.0 50 | 0.0 2 | 0.0 021 | 0.0 04 | 0.0 06 | 0.0 3 | 0.0 1 | 0.0 06 | 0.0 02 | 0.0 02 | 0.0 067 | 0.34 |
| K | 0.2 | 0.5 12 | 2.9 5 | 0.5 06 | 0.2 00 | 0.0 23 | 0.0 022 | 0.0 08 | 0.0 04 | 0.0 4 | 0.0 1 | 0.0 08 | 0.0 02 | 0.0 04 | 0.0 064 | 0.34 |
| L | 0.1 84 | 0.5 2 | 3.1 4 | 0.4 94 | 0.2 02 | 0.0 19 | 0.0 020 | 0.0 07 | 0.0 03 | 0.0 1 | 0.0 0 | 0.0 09 | 0.0 02 | 0.0 04 | 0.0 054 | 0.33 |
| M | 0.1 77 | 1.5 4 | 2.6 3 | 0.5 1 | 0.0 55 | 0.0 22 | 0.0 022 | 0.0 09 | 0.0 03 | 0.0 1 | 0.0 0 | 0.0 57 | 0.0 03 | 0.0 02 | 0.0 046 | 0.50 |

[Table 2]

| Classification | Steel type | Slab heating temperature (°C) | Hot rolled thickness (mm) | FDT (°C) | Average cooling rate after hot rolling (°C/s) | CT (°C) | Cold rolled thickness (mm) | Cold rolling reduction ratio (%) |
|---|---|---|---|---|---|---|---|---|
| Comparative Example 1 | A | 1196 | 2.4 | 955 | 58 | 556 | 1.4 | 42 |
| Comparative Example 2 | B | 1210 | 2.5 | 935 | 661 | 545 | 1.6 | 36 |
| Comparative Example 3 | C | 1203 | 1.8 | 932 | 48 | 607 | 0.9 | 50 |
| Comparative Example 4 | D | 1221 | 2.0 | 942 | 35 | 633 | 1.0 | 50 |
| Comparative Example 5 | E | 1244 | 2.4 | 938 | 55 | 522 | 1.4 | 42 |
| Comparative Example 6 | F | 1189 | 2.1 | 966 | 56 | 525 | 1.2 | 43 |
| Comparative Example 7 | G | 1202 | 2.3 | 952 | 47 | 565 | 1.4 | 39 |
| Comparative Example 8 | H | 1234 | 2.5 | 922 | 55 | 545 | 1.5 | 40 |
| Comparative Example 9 | I | 1231 | 2.5 | 925 | 61 | 567 | 1.6 | 36 |
| Comparative Example 10 | J | 1198 | 2.7 | 945 | 66 | 552 | 1.8 | 33 |
| Inventive Example 1 | K | 1212 | 2.2 | 949 | 58 | 555 | 1.2 | 45 |
| Inventive Example 2 | L | 1248 | 2.1 | 930 | 57 | 565 | 1.2 | 43 |
| Comparative Example 11 | M | 1245 | 2.5 | 947 | 49 | 552 | 1.6 | 36 |

[Table 3]

| Classification | Steel type | SS (°C) | Average cooling rate for primary cooling (°C/s) | SCS (°C) | Average cooling rate for secondary cooling (°C/s) | RCS (°C) | RHS (°C) | Reheating rate (°C/s) |
|---|---|---|---|---|---|---|---|---|
| Comparative Example 1 | A | 859 | 2.6 | 685 | 19.2 | 306 | 421 | 0.7 |
| Comparative Example 2 | B | 861 | 3.9 | 637 | 18.6 | 315 | 418 | 1.4 |
| Comparative Example 3 | C | 862 | 3.9 | 620 | 16.1 | 323 | 417 | 0.7 |
| Comparative Example 4 | D | 857 | 4.2 | 577 | 12.9 | 322 | 445 | 0.9 |
| Comparative Example 5 | E | 846 | 3.9 | 605 | 15.5 | 319 | 431 | 1.8 |
| Comparative Example 6 | F | 847 | 4.4 | 595 | 17.0 | 301 | 422 | 0.9 |
| Comparative Example 7 | G | 860 | 5.0 | 587 | 17.8 | 297 | 424 | 2.6 |
| Comparative Example 8 | H | 847 | 3.7 | 622 | 17.4 | 302 | 413 | 0.8 |
| Comparative Example 9 | I | 847 | 2.4 | 675 | 15.6 | 343 | 417 | 0.6 |
| Comparative Example 10 | J | 857 | 3.4 | 633 | 14.5 | 347 | 422 | 1.2 |
| Inventive Example 1 | K | 840 | 4.0 | 607 | 17.6 | 302 | 416 | 1.5 |
| Inventive Example 2 | L | 848 | 3.6 | 612 | 16.1 | 295 | 415 | 1.8 |
| Comparative Example 11 | M | 842 | 4.1 | 606 | 17.6 | 301 | 445 | 3.1 |

[Table 4]

| Classification | Steel type | YS (MPa) | TS (MPa) | EL (%) | YR | HER (%) | Fraction of retained austenite (area%) | Fraction of fresh martensite (area%) | Fraction of ferrite (area%) | Fraction of cementite (volume %) | Maximum LME crack (μm) |
|---|---|---|---|---|---|---|---|---|---|---|---|
| Comparative Example 1 | A | 940 | 1126 | 10.8 | 0.83 | 32.7 | 5% | 5% | 1% | 1 | 80 |
| Comparative Example 2 | B | 962 | 1102 | 10.4 | 0.87 | 33.7 | 4% | 3% | 0% | 2 | 69 |
| Comparative Example 3 | C | 898 | 1139 | 9.7 | 0.79 | 22.1 | 4% | 15% | 3% | 2 | 60 |
| Comparative Example 4 | D | 959 | 1086 | 11.3 | 0.88 | 51.1 | 5% | 0% | 2% | 2 | 87 |
| Comparative Example 5 | E | 978 | 1152 | 11.3 | 0.85 | 28.4 | 5% | 5% | 0% | 1 | 77 |
| Comparative Example 6 | F | 963 | 1232 | 9.6 | 0.78 | 22.4 | 5% | 10% | 1% | 1 | 107 |
| Comparative Example 7 | G | 744 | 1304 | 10.0 | 0.57 | 10.9 | 4% | 20% | 4% | 1 | 76 |
| Comparative Example 8 | H | 1092 | 1253 | 12.2 | 0.87 | 25.6 | 6% | 8% | 0% | 1 | 65 |
| Comparative Example 9 | I | 779 | 1239 | 10.6 | 0.63 | 17.2 | 7% | 19% | 2% | 1 | 71 |
| Comparative Example 10 | J | 917 | 1193 | 9.8 | 0.77 | 16.6 | 5% | 17% | 1% | 1 | 77 |
| Inventive Example 1 | K | 919 | 1181 | 11.0 | 0.78 | 36.5 | 4% | 5% | 0% | 2 | 66 |
| Inventive Example 2 | L | 839 | 1235 | 11.3 | 0.68 | 37.9 | 5% | 10% | 1% | 2 | 69 |
| Comparative Example 11 | M | 1042 | 1195 | 15.2 | 0.87 | 41.1 | 9% | 3% | 0% | 0 | 149 |

First, Comparative Examples 1 to 5 are cases in which steel types A to E were applied, respectively. Steel types A to E have the contents of C, Mn, or Cr lower than that of the range of the present invention, in which strength of TS 1180 MPa class could not be obtained. Even for steels, like steel types A to E, in which the alloy component addition amount is outside of the range of the components of the present invention, tensile strength higher than 1180 MPa may be obtained if annealing heat treatment conditions are significantly changed, but in this case, it is necessity to introduce an excessively large amount of fresh martensite and a high hole expansion ratio cannot be obtained. Comparative Example 6 is a case to which steel type F having a C content exceeding the range of the present invention was applied, in which a high hole expansion ratio could not be obtained even if the process conditions suggested in the present invention were satisfied.

Steel type G of Comparative Example 7 is a case in which the Mn content exceeds the range of the present invention, whereby a ratio of fresh martensite reaches 20%, so that a hole expansion ratio is significantly deteriorated and a yield ratio is also too low. In addition, steel type H of Comparative Example 8 was a steel type in which Cr was increased instead of Mn, and it was difficult to obtain a low yield ratio.

To Comparative Examples 9 and 10, steel types I and J satisfying the alloy composition of the present invention were applied, but as an annealing and quenching temperature exceeded 330°C, the ratio of fresh martensite increased and a hole expansion ratio was significantly deteriorated.

Inventive Examples 1 and 2 are cases to which steel types K and L satisfying the alloy composition of the invention present are applied and in which all process conditions are satisfied, and here, a hole expansion ratio of 25% or more and elongation suitable for processing of 5% to 13% may be obtained at a low yield ratio of 0.65 to 0.85.

Steel types F and M applied to Comparative Examples 6 and 11, respectively, have an alloy amount that does not satisfy Equation 1, and due to this, it can be seen that a maximum size of the LME crack in the weld portion exceeded 100 μm, and thus, LME crack resistance was inferior.

Meanwhile, cracks in an overlapping portion, which are not allowed to exist as severe LME cracks, were not present in all of the test materials.

While exemplary embodiments have been shown and described above, it will be apparent to those skilled in the art that modifications and variations could be made without departing from the scope of the present invention as defined by the appended claims.

**Claims**

1. A high-strength cold rolled steel sheet comprising:

   by weight percent, 0.17 to 0.21% of carbon (C), 0.3 to 0.8% of silicon (Si), 2.7 to 3.3% of manganese (Mn), 0.3 to 0.7% of chromium (Cr), 0.01 to 0.3% of aluminum (Al), 0.01 to 0.03% of titanium (Ti), 0.001 to 0.003% of boron (B), 0.04% or less of phosphorus (P), 0.02% or less of sulfur (S), 0.01% or less of nitrogen (N), the balance of iron (Fe), and other inevitable impurities, optionally further comprising 0.1% or less of copper (Cu), 0.1% or less of nickel (Ni), 0.1% or less of molybdenum (Mo), 0.03% or less of niobium (Nb) and 0.01% of less of vanadium (V), wherein the contents of carbon (C), silicon (Si), and aluminum (Al) satisfy Equation 1 below, a microstructure thereof consists of, by area fraction, 3 to 7% of retained austenite, 5 to 15% of fresh martensite, 5% or less, including 0%, of ferrite, 1 to 3% of a cementite, and the balance of bainite or tempered martensite, and, wherein the cementite is precipitated and distributed between bainite laths or in the laths or grain boundary of a tempered martensite phase, wherein, a type and fraction of the microstructure were measured through XRD peak analysis in the case of retained austenite, and the fractions of the remaining fresh martensite, ferrite, cementite, bainite and tempered martensite phase were measured through a scanning electron microscope EBSD analysis,

$$\text{Equation 1: } 0.20\% \leq [C] + ([Si]+[Al])/5 \leq 0.35\%,$$

   wherein [C], [Si], [Al] refer to weight percents of C, Si, and Al, respectively.

2. A high strength hot-dip galvanized steel sheet further comprising a hot-dip zinc plating layer on a surface of the high-strength cold rolled steel sheet of claim 1.

3. A high strength hot-dip galvanized steel sheet further comprising an alloyed hot-dip zinc plating layer on a surface of the high-strength cold rolled steel sheet of claim 1.

4. A method of manufacturing a high-strength cold rolled steel sheet according to claim 1, the method comprising:

   preparing a slab including, by weight percent, 0.17 to 0.21% of carbon (C), 0.3 to 0.8% of silicon (Si), 2.7 to 3.3% of manganese (Mn), 0.3 to 0.7% of chromium (Cr), 0.01 to 0.3% of aluminum (Al), 0.01 to 0.03% of titanium (Ti), 0.001 to 0.003% of boron (B), 0.04% or less of phosphorus (P), 0.02% or less of sulfur (S), 0.01% or less of nitrogen (N), the balance of iron (Fe), and other inevitable impurities, optionally further comprising 0.1% or less of copper (Cu), 0.1% or less of nickel (Ni), 0.1% or less of molybdenum (Mo), 0.03% or less of niobium (Nb) and 0.01% of less of vanadium (V),

wherein the contents of carbon (C), silicon (Si), and aluminum (Al) satisfy Equation 1 below;

heating the slab to a temperature in a range of 1,150°C to 1,250°C;

finish hot rolling the heated slab within a finish delivery temperature (FDT) range of 900°C to 980°C to obtain a hot rolled steel sheet;

cooling the hot rolled steel sheet at an average cooling rate of 10°C/sec to 100°C/sec after the finish hot rolling;

coiling the cooled hot rolled steel sheet in a temperature in a range of 500°C to 700°C;

cold rolling the coiled hot rolled steel sheet at a cold-rolling reduction ratio of 30% to 60% to obtain a cold rolled steel sheet;

continuously annealing the cold rolled steel sheet at a temperature in a range of Ae3+30°C to Ae3+80°C;

primarily cooling the continuously annealed steel sheet at an average cooling rate of 10°C/s or less to a temperature in a range of 560°C to 700°C and secondarily cooling the steel sheet at an average cooling rate of 10°C/s or more to a temperature in a range of 270°C to 330°C, where a temperature for terminating the primary cooling is defined as a point in time at which rapid cooling is started by additionally applying a quenching facility that has not been applied in the primary cooling; and

reheating the cooled steel sheet at a temperature increase rate of 5°C/s or lower to a temperature in a range of 380°C to 460°C,

$$\text{Equation 1: } 0.20\% \leq [C] + ([Si]+[Al])/5 \leq 0.35\%,$$

wherein [C], [Si], and [Al] refer to weight percent of C, Si, and Al, respectively.

5. The method of claim 4, wherein the continuous annealing is performed at a temperature in a range of 830°C to 880°C.

6. A method of manufacturing a high strength hot-dip galvanized steel sheet according to claim 2, comprising:

   performing method steps according to claim 4,
   performing hot-dip zinc plating on the reheated cold rolled steel sheet at a temperature in a range of 430°C to 490°C.

7. A method of manufacturing a high strength hot-dip galvanized steel sheet according to claim 3, comprising:

   performing method steps according to claim 6,
   wherein, after the hot-dip zinc plating, annealing for alloying is performed, and cooling is then performed to room temperature.

8. The method of claim 7, wherein, after cooling to the room temperature, temper rolling less than 1% is performed.

**Patentansprüche**

1. Hochfestes kaltgewalztes Stahlblech, umfassend:

   nach Gewichtsprozent, 0,17 bis 0,21 % Kohlenstoff (C), 0,3 bis 0,8 % Silizium (Si), 2,7 bis 3,3 % Mangan (Mn), 0,3 bis 0,7 % Chrom (Cr), 0,01 bis 0,3 % Aluminium (Al), 0,01 bis 0,03 % Titan (Ti), 0,001 bis 0,003 % Bor (B), 0,04 % oder weniger Phosphor (P), 0,02 % oder weniger Schwefel (S), 0,01 % oder weniger Stickstoff (N), den Rest Eisen (Fe) und andere unvermeidbare Verunreinigungen, wahlweise ferner umfassend 0,1 % oder weniger Kupfer (Cu), 0,1 % oder weniger Nickel (Ni), 0,1 % oder weniger Molybdän (Mo), 0,03 % oder weniger Niob (Nb) und 0,01 % oder weniger Vanadium (V), wobei die Gehalte von Kohlenstoff (C), Silizium (Si) und Aluminium (Al) die nachfolgende Gleichung 1 erfüllen, eine Mikrostruktur davon, nach Flächenanteil, aus 3 bis 7 % Restaustenit, 5 bis 15 % frischem Martensit, 5 % oder weniger, einschließlich 0 %, Ferrit, 1 bis 3 % eines Cementits und dem Rest Bainit oder gehärtetem Martensit besteht, und

   wobei das Cementit ausgefällt und zwischen Bainitlatten oder in den Latten oder der Korngrenze einer gehärteten Martensitphase verteilt wird, wobei ein Typ und ein Anteil der Mikrostruktur durch XRD-Peakanalyse im Fall von Restaustenit gemessen wurden und die Anteile an verbleibendem frischem Martensit, Ferrit, Cementit, Bainit und gehärteter Martensitphase durch Rasterelektronenmikroskop-EBSD-Analyse gemessen wurden,

Gleichung 1: 0,20 % ≤ [C] + ([Si]+[Al])/5 ≤ 0,35 %,

wobei sich [C], [Si], [Al] auf Gewichtsprozente von C, Si bzw. Al beziehen.

2. Hochfestes feuerverzinktes Stahlblech, ferner umfassend eine Feuerverzinkungsschicht auf einer Oberfläche des hochfesten kaltgewalzten Stahlblechs nach Anspruch 1.

3. Hochfestes feuerverzinktes Stahlblech, ferner umfassend eine legierte Feuerverzinkungsschicht auf einer Oberfläche des hochfesten kaltgewalzten Stahlblechs nach Anspruch 1.

4. Verfahren zum Herstellen eines hochfesten kaltgewalzten Stahlblechs nach Anspruch 1, wobei das Verfahren Folgendes umfasst:

Herstellen einer Bramme, einschließlich, nach Gewichtsprozent, 0,17 bis 0,21 % Kohlenstoff (C), 0,3 bis 0,8 % Silizium (Si), 2,7 bis 3,3 % Mangan (Mn), 0,3 bis 0,7 % Chrom (Cr), 0,01 bis 0,3 % Aluminium (Al), 0,01 bis 0,03 % Titan (Ti), 0,001 bis 0,003 % Bor (B), 0,04 % oder weniger Phosphor (P), 0,02 % oder weniger Schwefel (S), 0,01 % oder weniger Stickstoff (N), des Rests Eisen (Fe) und anderer unvermeidbarer Verunreinigungen, wahlweise ferner umfassend 0,1 % oder weniger Kupfer (Cu), 0,1 % oder weniger Nickel (Ni), 0,1 % oder weniger Molybdän (Mo), 0,03 % oder weniger Niob (Nb) und 0,01 % oder weniger Vanadium (V), wobei die Gehalte von Kohlenstoff (C), Silizium (Si) und Aluminium (Al) die nachfolgende Gleichung 1 erfüllen;
Erhitzen der Bramme auf eine Temperatur in einem Bereich von 1150 °C bis 1250 °C;
Warmfertigwalzen der erhitzten Bramme innerhalb eines Endaustrittstemperatur(FDT)-Bereichs von 900 °C bis 980 °C, um ein warmgewalztes Stahlblech zu erhalten;
Abkühlen des warmgewalzten Stahlblechs bei einer durchschnittlichen Abkühlungsgeschwindigkeit von 10 °C/s bis 100 °C/s nach dem Warmfertigwalzen;
Aufwickeln des abgekühlten warmgewalzten Stahlblechs bei einer Temperatur in einem Bereich von 500 °C bis 700 °C;
Kaltwalzen des aufgewickelten warmgewalzten Stahlblechs bei einem Reduktionsverhältnis für das Kaltwalzen von 30 % bis 60 %, um ein kaltgewalztes Stahlblech zu erhalten;
kontinuierliches Glühen des kaltgewalzten Stahlblechs bei einer Temperatur in einem Bereich von Ae3+30 °C bis Ae3+80 °C;
primäres Abkühlen des kontinuierlich geglühten Stahlblechs bei einer durchschnittlichen Abkühlungsgeschwindigkeit von 10 °C/s oder weniger auf eine Temperatur in einem Bereich von 560 °C bis 700 °C und sekundäres Abkühlen des Stahlblechs bei einer durchschnittlichen Abkühlungsgeschwindigkeit von 10 °C/s oder mehr auf eine Temperatur in einem Bereich von 270 °C bis 330 °C, wobei eine Temperatur zum Beenden des primären Abkühlens als ein Zeitpunkt definiert ist, zu dem ein schnelles Abkühlen durch zusätzliches Anwenden einer Abschreckeinrichtung, die bei dem primären Abkühlen nicht angewendet wurde, begonnen wird; und erneutes Erhitzen des abgekühlten Stahlblechs bei einer Temperaturerhöhungsgeschwindigkeit von 5 °C/s oder weniger auf eine Temperatur in einem Bereich von 380 °C bis 460 °C,

Gleichung 1: 0,20 % ≤ [C] + ([Si]+[Al])/5 ≤ 0,35 %,

wobei sich [C], [Si] und [Al] auf das Gewichtsprozent von C, Si bzw. Al beziehen.

5. Verfahren nach Anspruch 4, wobei das kontinuierliche Glühen bei einer Temperatur in einem Bereich von 830 °C bis 880 °C durchgeführt wird.

6. Verfahren zum Herstellen eines hochfesten feuerverzinkten Stahlblechs nach Anspruch 2, umfassend:

Durchführen der Verfahrensschritte nach Anspruch 4,
Durchführen von Feuerverzinkung an dem erneut erhitzten kaltgewalzten Stahlblech bei einer Temperatur in einem Bereich von 430 °C bis 490 °C.

7. Verfahren zum Herstellen eines hochfesten feuerverzinkten Stahlblechs nach Anspruch 3, umfassend:

Durchführen der Verfahrensschritte nach Anspruch 6,

wobei nach dem Feuerverzinken ein Glühen zum Legieren durchgeführt wird und dann ein Abkühlen auf Raumtemperatur durchgeführt wird.

8.  Verfahren nach Anspruch 7, wobei nach dem Abkühlen auf Raumtemperatur ein Nachwalzen von weniger als 1 % durchgeführt wird.

**Revendications**

1.  Tôle d'acier laminée à froid à haute résistance comprenant :

    en pour cent en poids, 0,17 à 0,21 % de carbone (C), 0,3 à 0,8 % de silicium (Si), 2,7 à 3,3 % de manganèse (Mn), 0,3 à 0,7 % de chrome (Cr), 0,01 à 0,3 % d'aluminium (Al), 0,01 à 0,03 % de titane (Ti), 0,001 à 0,003 % de bore (B), 0,04 % ou moins de phosphore (P), 0,02 % ou moins de soufre (S), 0,01 % ou moins d'azote (N), le reste étant du fer (Fe), et d'autres impuretés inévitables, comprenant en outre facultativement 0,1 % ou moins de cuivre (Cu), 0,1 % ou moins de nickel (Ni), 0,1 % ou moins de molybdène (Mo), 0,03 % ou moins de niobium (Nb) et 0,01 % ou moins de vanadium (V),
    dans laquelle les teneurs en carbone (C), silicium (Si) et aluminium (Al) satisfont l'équation 1 ci-dessous, une microstructure de la tôle d'acier consiste en, en fraction d'aire, 3 à 7 % d'austénite résiduelle, 5 à 15 % de martensite fraîche, 5 % ou moins, y compris 0 %, de ferrite, 1 à 3 % d'une cémentite, et le reste de bainite ou de martensite revenue, et,
    dans laquelle la cémentite est précipitée et répartie entre des lamelles de bainite ou dans les lamelles ou aux joints de grains d'une phase de martensite revenue, dans laquelle, un type et une fraction de la microstructure ont été mesurés par analyse des pics de diffraction des rayons X (XRD) dans le cas de l'austénite résiduelle, et les fractions des phases restantes de martensite fraîche, de ferrite, de cémentite, de bainite et de martensite revenue ont été mesurées par analyse EBSD au microscope électronique à balayage,

    $$\text{Équation 1 : } 0,20\ \% \leq [C] + ([Si] + [Al])/5 \leq 0,35\ \%,$$

    dans laquelle [C], [Si], [Al] font référence aux pour cent en poids de C, Si et Al, respectivement.

2.  Tôle d'acier galvanisée à chaud à haute résistance comprenant en outre une couche de zingage à chaud sur une surface de la tôle d'acier laminée à froid à haute résistance de la revendication 1.

3.  Tôle d'acier galvanisée à chaud à haute résistance comprenant en outre une couche de zingage à chaud alliée sur une surface de la tôle d'acier laminée à froid à haute résistance de la revendication 1.

4.  Procédé de fabrication d'une tôle d'acier laminée à froid à haute résistance de la revendication 1, le procédé comprenant :

    la préparation d'une brame incluant, en pour cent en poids, 0,17 à 0,21 % de carbone (C), 0,3 à 0,8 % de silicium (Si), 2,7 à 3,3 % de manganèse (Mn), 0,3 à 0,7 % de chrome (Cr), 0,01 à 0,3 % d'aluminium (Al), 0,01 à 0,03 % de titane (Ti), 0,001 à 0,003 % de bore (B), 0,04 % ou moins de phosphore (P), 0,02 % ou moins de soufre (S), 0,01 % ou moins d'azote (N), le reste étant du fer (Fe), et d'autres impuretés inévitables, comprenant en outre facultativement 0,1 % ou moins de cuivre (Cu), 0,1 % ou moins de nickel (Ni), 0,1 % ou moins de molybdène (Mo), 0,03 % ou moins de niobium (Nb) et 0,01 % ou moins de vanadium (V),
    dans lequel les teneurs en carbone (C), silicium (Si) et aluminium (Al) satisfont l'équation 1 ci-dessous ;
    le chauffage de la brame jusqu'à une température dans une plage de 1 150 °C à 1 250 °C ;
    le laminage à chaud de finition de la brame chauffée dans une plage de température de sortie de finition (FDT) de 900 °C à 980 °C afin d'obtenir une tôle d'acier laminée à chaud ;
    le refroidissement de la tôle d'acier laminée à chaud à une vitesse de refroidissement moyenne de 10 °C/s à 100 °C/s après le laminage à chaud de finition ;
    le bobinage de la tôle d'acier laminée à chaud refroidie à une température dans une plage de 500 °C à 700 °C ;
    le laminage à froid de la tôle d'acier laminée à chaud bobinée à un taux de réduction de laminage à froid de 30 % à 60 % afin d'obtenir une tôle d'acier laminée à froid ;
    le recuit en continu de la tôle d'acier laminée à froid à une température dans une plage de Ae3 + 30 °C à Ae3 + 80 °C ;

le refroidissement primaire de la tôle d'acier recuite en continu à une vitesse de refroidissement moyenne de 10 °C/s ou moins jusqu'à une température dans une plage de 560 °C à 700 °C, et le refroidissement secondaire de la tôle d'acier à une vitesse de refroidissement moyenne de 10 °C/s ou plus jusqu'à une température dans une plage de 270 °C à 330 °C, où une température de fin du refroidissement primaire est définie comme un moment où le refroidissement rapide est déclenché par l'application supplémentaire d'un dispositif de trempe qui n'a pas été appliqué lors du refroidissement primaire ; et le réchauffage de la tôle d'acier refroidie à une vitesse d'augmentation de température de 5 °C/s ou moins jusqu'à une température dans une plage de 380 °C à 460 °C,

$$\text{Équation 1 : } 0{,}20 \% \leq [C] + ([Si]+[Al])/5 \leq 0{,}35 \%,$$

dans laquelle [C], [Si] et [Al] font référence au pour cent en poids de C, Si et Al, respectivement.

5. Procédé selon la revendication 4, dans lequel le recuit en continu est réalisé à une température dans une plage de 830 °C à 880 °C.

6. Procédé de fabrication d'une tôle d'acier galvanisée à chaud à haute résistance selon la revendication 2, comprenant :

la réalisation des étapes de procédé selon la revendication 4,
la réalisation d'un zingage à chaud sur la tôle d'acier laminée à froid réchauffée à une température dans une plage de 430 °C à 490 °C.

7. Procédé de fabrication d'une tôle d'acier galvanisée à chaud à haute résistance selon la revendication 3, comprenant :

la réalisation des étapes de procédé selon la revendication 6,
dans lequel, après le zingage à chaud, un recuit d'alliage est réalisé, puis un refroidissement est réalisé jusqu'à température ambiante.

8. Procédé selon la revendication 7, dans lequel, après refroidissement jusqu'à la température ambiante, un laminage de revenu inférieur à 1 % est réalisé.

**EP 3 859 041 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20177015003

- WO 2017109541 A1